# EUROPÄISCHE PATENTSCHRIFT

(11) **EP 2 414 065 B1**
(45) Veröffentlichungstag und Bekanntmachung des Hinweises auf die Patenterteilung: **03.05.2017**
(21) Anmeldenummer: 10718450.9
(22) Anmeldetag: 29.03.2010
(51) Int. Cl.: B01D 39/18

(54) **FILTERMATERIAL ZUM REINIGEN VON LUFT UND GASEN**
FILTER MATERIAL FOR CLEANING AIR AND GASES
MATÉRIAU FILTRANT POUR LA PURIFICATION D'AIR ET DE GAZ

(30) Priorität: 03.04.2009 DE 102009016148
(43) Veröffentlichungstag der Anmeldung: 08.02.2012
(73) Patentinhaber: McAirlaid's Vliesstoffe GmbH, 37339 Berlingerode (DE)
(72) Erfinder: SCHMIDT, Andreas, 37115 Duderstadt (DE)
(74) Vertreter: Christophersen, Ulrich Rudolf
(86) Internationale Anmeldenummer: PCT/DE2010/075030
(87) Internationale Veröffentlichungsnummer: WO 2010/112024

(56) Entgegenhaltungen:
- EP-A1- 1 795 247
- WO-A1-99/25281
- WO-A2-2007/118640
- DE-B- 1 168 309

## Beschreibung

Die vorliegende Erfindung betrifft ein Filtermaterial zum Reinigen von Luft und Gasen, einen Filter zum Reinigen von Luft und Gasen sowie die Verwendung des Filtermaterials in Zigarettenfiltern und in Entstaubungs- und Gasreinigungsanlagen.

Filtermaterialien zum Reinigen von Luft und Gasen, kurz Gasfilter genannt, werden eingesetzt, um unerwünschte Schwebstoffe, wie Krankheitserreger, Pollen, Stäube oder Fremdgase aus der Luft bzw. dem Gas herauszufiltern. Wesentliche Einsatzgebiete sind in der staubemittierenden Industrie, wie Papier- und Zementindustrie, in Lüftungsanlagen, um Schadstoffe von Wohn- und Arbeitsräumen fernzuhalten, in Staubsaugern, um die austretende Luft zu reinigen.

Ein weiteres Anwendungsgebiet ist der Einsatz als Filter in Rauchwaren, z. B. in Zigaretten. Der Zigarettenfilter soll den Anteil gesundheitsschädlicher Stoffe wie Kondensat und Gase im Rauch der Zigarette verringern. Zudem wird durch den Filter der Rauch etwas milder, weshalb ihn manche Raucher für einen intensiveren Geschmack entfernen oder verkürzen. Bei einer klassischen Filterzigarette ist der Filter umhüllt von einem korkfarbenen Mundstück, um die Braunfärbung des Filters nicht sichtbar werden zu lassen. Die meisten industriell gefertigten Zigaretten sind mit einem Filter versehen, Selbstdreher können diese im Tabakhandel kaufen.

DE1 168 309 offenbart einen Tabakwarenfilter aus stellenweise miteinander verbundenen Kunstfasern, von denen wenigstens ein Teil thermoplastisch ist. Die Fasern bilden eine Florbahn und sind über ein Prägemuster miteinander verbunden und sind somit als Schleier formbeständig. Zur Herstellung des Filters wird die Florbahn zu einem Filterstrang zusammengerafft, so dass die durch die Prägung erzeugten Verbindungsstellen im zusammengerafften Zustand der Florbahn im Filterkörper annähernd gleichmäßig verteilt sind.

Der Grundstoff für die Herstellung der aus dem Stand der Technik bekannten Zigarettenfilter ist Celluloseacetat. Das Celluloseacetat liegt in Form von Fäden vor, deren Durchmesser zwischen 30 und 50 µm beträgt. Sie werden zu einem Endlos-Band zusammengeführt/gebündelt, wobei sie punktuell mit Triacetin verklebt werden. Ein derartiger Zigarettenfilter kann Partikel bis zu einem Durchmesser von weniger als 0,2 µm zurückhalten.

Das in den Zigarettenfiltern verwendete Celluloseacetat wird durch chemische Modifikation von Cellulose erhalten. Es ist ein preisgünstiger Werkstoff, der sich zudem auch gut verarbeiten lässt. Durch die chemische Modifikation der Cellulose zu Celluloseacetat ist die Faser nicht mehr als Nahrungsgrundlage für Mikroorganismen verwendbar, d. h. sie ist beständig gegenüber Schimmelpilz, Pilz- oder Bakterienbefall, damit zugleich aber auch schwer biologisch abbaubar. Die chemische Beständigkeit ist in Zigarettenfiltern nachteilig, da sich diese nur sehr langsam abbauen bzw. zersetzen. In die Natur entsorgte, d. h. weggeworfene, Zigarettenkippen bleiben lange Zeit unverändert und sind als Unrat sichtbar.

Aus dem europäischen Patent EP 1 032 283 ist eine Filterzigarette mit einem biologisch abbaubaren Filter bekannt. Der in dieser Filterzigarette enthaltene Filter enthält einen nach dem "Airlaid"-Verfahren hergestellten ungekrimpten Cellulosevlies mit normaler Retentionsleistung und einer in Umfangsrichtung verlaufenden Filter-Ventilationszone. Diese Zigarette soll den Acetat-typischen Geschmackseindruck und auch das Acetat-typische optische Erscheinungsbild liefern. Um diese Ziele zu erreichen, muss die Zigarette einen spezifischen, in der EP 1 032 283 beschriebenen Aufbau aufweisen.

Filtermaterialien sind aber nicht nur für Rauchwaren von Bedeutung. In der Industrie und im Haushalt besteht ein ständiger Bedarf nach neuen und preiswerten Filtermaterialien, mit denen unerwünschte Schwebstoffe, wie Krankheitserreger, Pollen, Staube oder Gase aus der Abluft entfernt werden sollen oder, wie bei Lüftungsanlagen in Wohn- und Geschäftsräumen, um Schadstoffe vom Eintritt in diese Räume fern zu halten.

Der Erfindung liegt die Aufgabe zugrunde, ein Filtermaterial zur Verfügung zu stellen, welches die Vorteile einer guten Filterwirkung mit dem Vorteil einer biologischen Abbaubarkeit verbindet.

Zur Lösung dieser Aufgabe wird ein Filter gemäß Anspruch 1 vorgeschlagen. Das verwendete Fasermaterial umfasst eine Faserschicht aus Zellstofffasern , die bereichsweise durch Verpressen unter Verdichtung der Zellstofffasern in den verpressten Bereichen miteinander verbunden sind. Durch das bereichsweise Verpressen der Zellstofffasern erhält die Cellulose/der Zellstoff eine gewisse Festigkeit, ohne die Durchlässigkeit für gasförmige Substanzen in den nicht verpressten Bereichen zu verringern. Es wurde eine verbesserte Filterwirkung festgestellt. Die Cellulose bzw. die Cellulosefasern, aus welchen das Filtermaterial hergestellt ist, sind preiswerte und im Handel verfügbare Materialien. Zudem sind sie einfach zu verarbeiten.

Das erfindungsgemäße Filtermaterial enthält als wesentlichen Inhaltsstoff ein natürliches Material, Cellulose bzw. Zellstoff, das im Wesentlichen in Form von unregelmäßig angeordneten Fasern vorliegt. Vorzugsweise werden Cellulosefasern eingesetzt, die in Form von Vliesstoffen, insbesondere als Airlaid-Vliese, vorliegen. Vliesstoffen bzw. Vliesen zählen zu den Textilverbundstoffen, es handelt sich um flexible, poröse Flächengebilde, die durch Verschlingung und/oder kohäsive und/oder adhäsive Verbindung der Fasern hergestellt werden. Die Vliese sind lockere Materialien aus Fasern, deren Zusammenhalt im allgemeinen durch die den Fasern eigene Haftung gegeben ist. Die Vliese können bei Bedarf verfestigt werden, wobei für den Einsatz in der vorliegenden Erfindung die mechanische Verfestigung mit Verzicht auf Bindemittel bevorzugt ist.

Biologisch abbaubar bedeutet im Rahmen der vorliegenden Erfindung, dass die einzelnen Inhaltsstoffe durch Mikroorganismen in Gegenwart von Sauerstoff in Kohlenstoffdioxid, Wasser und Salze anderer vorhandener Elemente (Mineralisation) unter Bildung neuer Biomasse oder in Abwesenheit von Sauerstoff in Kohlenstoffdioxid, Methan, Mineralsalze und neue Biomasse zerlegt werden, wobei das Material die europäische Norm EN 13432 "Anforderungen an die Verwertung von Verpackungen durch Kompostierung und biologischen Abbau" erfüllen sollte. Gemäß dieser Norm dürfen nach einer Kompostierung von höchstens 12 Wochen Dauer in einer >2 mm-Siebfraktion maximal 10 % des ursprünglichen Trockengewichts des Prüfmaterials, d.h. des Ausgangsmaterials, gefunden werden.

In einer möglichen Ausgestaltung weist das Filtermaterial neben der Faserschicht aus verdichteten Zellstofffasern auf mindestens einer Flachseite eine weitere Schicht auf. Es ist auch möglich, dass das Filtermaterial auf beiden Flachseiten weitere Schichten aufweist, wobei diese weiteren Schichten aus gleichen oder voneinander verschiedenen Materialien sein können. Die Materialien, die für diese weiteren Schichten eingesetzt werden können, können beispielsweise Tissue, textile, vliesartige und/oder folienartige Materialien sein. Vorzugsweise besteht das Material für die weitere Schicht bzw. die weiteren Schichten ebenfalls aus Cellulose oder einem biologisch gut abbaubaren Kunststoffmaterial. Die weitere(n) Schicht(en) erhöhen die Festigkeit des Filtermaterials und erleichtern so die Verarbeitbarkeit in Highspeed-Maschinen.

In einer Ausgestaltung der vorliegenden Erfindung wird vorgeschlagen, dass die Zellstofffasern und die optional vorhandene(n) weitere(n) Schicht(en) in den verpressten Bereichen unter Hitzebeaufschlagung verpresst sind.

In einer möglichen Ausgestaltung sind die Faserschicht und die weitere Schicht ebenfalls durch ein nur bereichsweises Verpressen mittels Hitzbeaufschlagung miteinander verbunden. Die Herstellung solcher miteinander verbundener Zellstofffasern und Faserschichten bzw. - bahnen wird in den deutschen Patentanmeldungen DE19824825, DE19803837, DE19750890 und im europäischen Patent EP1032342 beispielhaft beschrieben.

Es wurde festgestellt, dass durch den Einsatz der nur bereichsweise verpressten Zellstofffasern als Filtermaterial eine sehr gute Filterwirkung, d. h. Rückhaltewirkung für die zu entfernenden Schwebstoffe und Gase, erreicht werden kann. Es wird vermutet, dass diese Wirkung dadurch erreicht wird, dass die einzelnen verpressten Bereiche die Oberfläche oder den Durchfluss des zu reinigenden Gases oder der Luft derart verändert, dass die Schwebstoffe zurückgehalten werden. Ein weiterer Grund könnte darin liegen, dass durch die Verpressung eine andere, besonders vorteilhafte Oberflächenstruktur auf den Flachseiten des Filtermaterials erzielt wird.

Erfindungsgemäß wird die Oberflächenstruktur des Filtermaterials dadurch variiert, dass das flächenartige Gehäuse derart gefaltet, gelegt und/oder gekräuselt wird, dass es ein gekräuseltes bzw. welliges Aussehen erhält, d. h. in Richtung des Faltens/Legens/Kräuselns verkürzt sich die Ausdehnung des flächenartigen Gebildes. Dieses Kräuseln oder Falten kann regelmäßig oder unregelmäßig sein. Diese Art der Strukturänderung wird als Kreppen oder Krimpen bezeichnet.

Das erfindungsgemäße Filtermaterial liegt üblicherweise als quasi zweidimensionale Lage vor, dessen Filterwirkung auf unterschiedlichste Weise ausgenutzt werden kann.

Für den Einsatz als Luft- oder Gasfilter wird das zweidimensionale flächenartige Gebilde aus der Faserschicht und optional vorhandenen weiteren Schichten, das in Form einer Faserbahn vorliegt, unter Ausbildung von sich in Längsrichtung des zu reinigenden Luft-/Gasstroms ersteckenden Kanälen gewickelt und wechselseitig gelegt ist. Die zu reinigende Luft bzw. das zu reinigende Gas kann in einer derartigen Ausführungsform von der einen Seite in das Filtermaterial eintreten und durchströmt so die gebildeten Kanäle und auch die Bereiche der Faserschichten, die nicht verpresst sind. Anhand des Faltens oder Legens des Filtermaterials kann die Größe (der Durchmesser) der sich dadurch bildenden Kanäle eingestellt werden. Die Einstellung der Größe dieser Kanäle ist desto einfacher, je dünner die Schicht aus Filtermaterial ist. Auf der anderen Seite darf die Dicke der Zellstofffasern, die lediglich partiell verpresst sind, nicht zu gering sein, da sonst die Festigkeit des Filtermaterials nicht ausreichend ist, um zu einem Filter verarbeitet zu werden. Die Schichtdicke des Filtermaterials beträgt vorzugsweise von 0,3 bis 1,8 mm.

Seitens der Erfinder wird vermutet, dass die gute Filterwirkung dadurch entsteht, dass die zu reinigenden Luft- oder Gasströme unterschiedliche Filterräume durchströmen. Einen weiteren Einfluss auf die Filterwirkung scheinen die Prägebereiche zu haben, da sich in diesen Bereichen die Oberflächenstruktur der Faserschicht ändert. Das erfindungsgemäße Filtermaterial eignet sich demgemäß ebenso zum Einsatz in Entstaubungs- und Gasreinigungsanlagen als auch als Filtermaterial in Rauchwaren.

Das erfindungsgemäß eingesetzte Filtermaterial hat üblicherweise ein Flächengewicht zwischen 15 g/m² und 600 g/m², vorzugsweise zwischen 20 g/m² und 200 g/m².

Die Filterleistung des erfindungsgemäßen Filters kann durch Zusatzstoffe gesteigert werden. Bei diesen Zusatzstoffen kann es sich beispielsweise um Absorptionsmittel oder auch um Geschmacks-, Aroma- oder weitere Hilfsstoffe handeln. Die Absorptionsmittel können beispielsweise ausgewählt sein aus Aktivkohlen, Zeolithen, Silikaten und/oder SiO₂. Die Absorptionsmittel zeichnen sich durch eine hohe Oberfläche und hohe Absorptionsleistung aus. Als weitere Additive mit einer Retentionswirkung für Schadstoffe können organische Säuren und deren Salze, Metalle und Metalloxide, Stickstoffkomponenten, Ionenaustauschersysteme, Alkohole, Polyphenole und Porphyrinderivate eingesetzt werden.

Je nach Einsatzgebiet können neben den Absorptionsmitteln auch Duft-, Geschmacks- und Aromastoffe sowie weitere Hilfsstoffe, die den Geschmack und die Verträglichkeit der Zigarette verbessern, enthalten sein, wie Menthol, Gewürznelkenöl, Kakao, Vanille und vergleichbare Stoffe.

Die Zugabe der Additive kann durch Streuen oder Aufsprühen auf die Filtermaterialien, z. B. auf die Fasern, vor oder nach dem Verpressen oder aber durch direkte Injektion in den Filterstrang selbst erfolgen.

Ein weiterer Gegenstand der vorliegenden Erfindung ist ein Filter zum Reinigen von Gasen und/oder Luft, welcher das voranstehend beschriebene Filtermaterial umfasst.

Ein weiterer Gegenstand der vorliegenden Erfindung ist ein Filter für Zigaretten, der das voranstehend beschriebene Filtermaterial umfasst.

Für den Einsatz in Zigarettenfiltern kann das in der Regel als Flächengebilde vorliegende Filtermaterial in an sich bekannter Weise in eine vorzugsweise zylindrische Form gebracht werden. In einer möglichen Ausgestaltung ist das Filtermaterial von einer Mantelschicht umgeben. Diese Mantelschicht kann dazu dienen, das Filtermaterial in Form zu halten, sie kann aber auch ein übliches Zigarettenpapier sein.

In der Ausgestaltung als Zigarettenfilter kann sich das Filtermaterial direkt an den Tabakbereich der Zigarette anschließen. In einer möglichen Ausführungsform kann der Filter an dem Ende, an welchem der Rauch von der Tabakseite her eintritt, ein weiteres Filtermaterial aufweisen. Bei diesem weiteren Filtermaterial kann es sich um übliche Materialien handeln, die in Filterzigaretten eingesetzt werden, beispielsweise Aktivkohle, Celluloseacetat oder sonstige aus dem Stand der Technik bekannte Filtermaterialien.

In einer weiteren möglichen Ausgestaltung enthält der Zigarettenfilter zusätzlich zu dem erfindungsgemäßen Filtermaterial noch ein ergänzendes Material, das an dem Ende, an welchem der Rauch austritt, also am mundseitigen Ende, angeordnet ist. Es kann beispielsweise weiteres Filtermaterial oder ein Material sein, welches den optischen Eindruck des Filters am filterseitigen Ende der Zigarette beeinflussen soll.

In einer möglichen Ausführungsform enthält die Mantelschicht Ventilationslöcher. Das Herstellen von Ventilationslöchern ist dem Fachmann bekannt.

Die Erfindung ist in den beigefügten Figuren anhand eines Ausführungsbeispiels genauer dargestellt. Es zeigen
- Fig. 1: eine perspektivische Darstellung des Filtermaterials mit zwei Schichten,
- Fig. 2: einen Schnitt durch das Filtermaterial im gekrimpten Zustand
- Fig. 3: eine perspektivische Ansicht eines Filters unter teilweiser Weglassung der Mantelschicht,
- Fig. 4: einen Schnitt durch den Filter entlang der Linie A-A in Fig. 3.

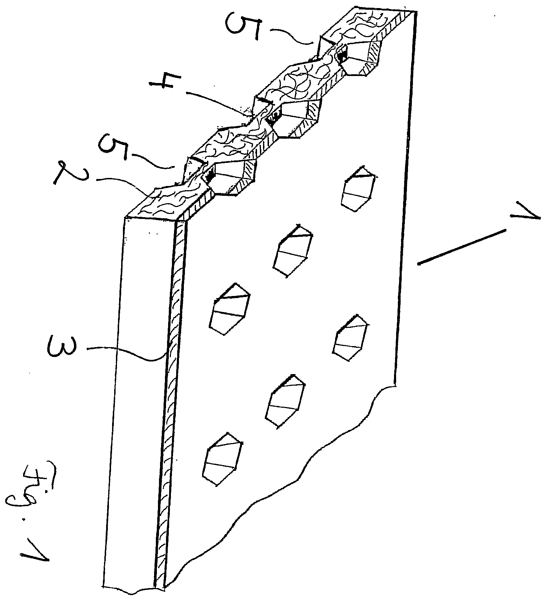

In Fig. 1 ist das erfindungsgemäße Filtermaterial in einem vergrößerten Maßstab perspektivisch dargestellt. Die Dicke ist übertrieben dargestellt. Das Filtermaterial 1 umfasst in der hier dargestellten Ausführungsform zwei Schichten, eine Faserschicht 2 und eine weitere Schicht 3.

Die untere, deutlich dickere Schicht ist eine Faserschicht 2 aus Zellstofffasern, optional mit Additiven. Die Schicht 2 wird vorzugsweise in einem Airlaid-Verfahren aus Cellulosematerial hergestellt. Derartiges Cellulosematerial steht preiswert als Massenmaterial zur Verfügung. Bei der Herstellung in einem kontinuierlichen Airlaid-Verfahren wird die Faserstoffbahn aus einer in einem Luftstrom aufgeschichteten Schüttung von Zellstofffasern aus Zellstoff (Fluff Pulp) und gegebenenfalls eingestreuten Absorbermaterialien hergestellt. Für die Herstellung einer standardisierten Ware kann auf die am Markt verfügbaren, nachwachsenden Holzrohstoffe zurückgegriffen werden.

Das Verfahren der Zellstoffschüttung im Luftstrom als Ausgangsprodukt für die Faserschicht 1 ermöglicht eine trockene Verarbeitung der Zellstofffasern und damit bei der anschließenden Verbindung mit der anderen Schicht eine gute Verdichtung der Zellstofffasern in einzelnen, d. h. diskreten Prägebereichen 4. Außerhalb solcher Prägebereiche 4 liegen die Fasern locker aneinander, was in diesen Zonen die Absorptionsfähigkeit / Filterwirkung und die Flexibilität der Schicht 1 verbessert.

Die weitere Schicht 3 ist wesentlich dünner als die Faserschicht 2. Die Schicht 3 kann beispielsweise von einer Bahn aus textilem, vliesartigem oder folienartigem Material gebildet werden.

Das Verbinden der beiden Schichten 2, 3 erfolgt beispielsweise in einem Prägeverfahren. Dabei kommt es zu einem bereichsweise Verpressen unter Verdichtung der Zellstofffasern der Faserschicht 2.

Die Verpressung ist nicht großflächig-gleichmäßig, sondern ein Verpressen findet hauptsächlich in Prägebereichen 4 statt, wobei sich Vertiefungen 5 in der Faserschicht 2 bilden. Die Vertiefungen 5 in den Prägebereichen 4 können rund oder mehreckig sein. In der hier dargestellten Ausführungsform weisen Sie die Gestalt von Pyramidenstümpfen oder Kegelstümpfen auf.

Wegen der Dünnwandigkeit der weiteren Schicht 3 ist das bei dem Verpressen entstehende Prägemuster auch auf der Außenseite der Schicht 3 erkennbar.

Die Prägung erfolgt mittels zweier Walzen, von denen eine mit einer die Vertiefungen 5 bildenden Struktur versehen ist. Auf diese Weise wird in den diskreten Prägebereichen 4 eine Verdichtung der Zellstofffasern erzielt. Außerhalb der Prägebereiche 4 liegen die Fasern locker aneinander, was die Absorptionsfähigkeit und die Flexibilität des Materials verbessert. Bei der Herstellung des Filtermaterials dieses Beispiels sind weder Klebstoffe noch andere Bindemittel, wie z. B. Latex, erforderlich. Vielmehr erfolgt die Verbindung rein thermomechanisch. Durch die gezielte Anordnung, wie Anzahl und Größe der Prägebereiche, lässt sich der Durchfluss des Gases und somit auch zum Teil die Filterwirkung steuern.

Das Flächengewicht der Faserschicht 2 kann zwischen 15 g/m² und 600 g/m² liegen. Vorzugsweise beträgt das Flächengewicht zwischen 20 g/m² und 200 g/m². Das Flächengewicht der weiteren Bahn 3 ist in der Regel etwas geringer als das Flächengewicht der Faserschicht 2 und liegt vorzugsweise zwischen 15 und 30 g/m².

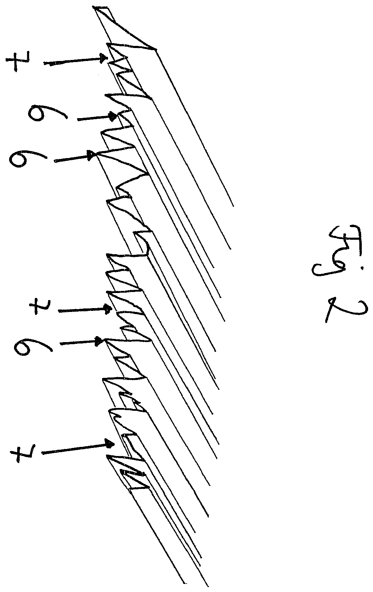

Fig. 2 zeigt einen Schnitt durch die Materialbahn 1 in gekrimpten Zustand. Die einzelnen Schichten sind hier nicht dargestellt. In der hier dargestellten Ausgestaltung ist das Material unregelmäßig in Falten gelegt. Es wird ein Filtermaterial erhalten, dass neben den Prägebereichen 4 eine Oberflächenstruktur mit Erhebungen 6 und weiteren Vertiefungen 7 aufweist. Durch diese Erhebungen und Vertiefungen wird eine Vergrößerung der Oberfläche erreicht.

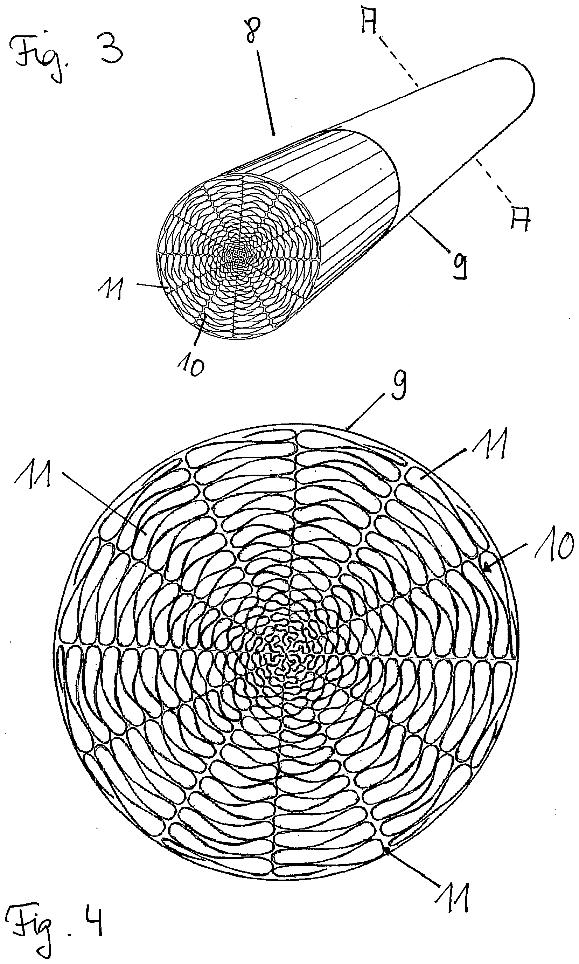

In Fig. 3 ist ein erfindungsgemäßer Filter 8 dargestellt, der aus dem in Fig. 1 dargestellten, als Flächengebilde vorliegenden Filtermaterial und einer Mantelschicht 9, die in der Darstellung teilweise weggelassen wurde, gebildet ist. Das Filtermaterial 1 ist in der hier dargestellten Ausführungsform wechselseitig gelegt oder gefaltet, wobei sich in Längsrichtung des Filters erstreckende Kanäle 11 bilden. Das wechselseitige Legen kann gleichmäßig oder unregelmäßig sein. Durch die Kanäle 11 und durch die Faserschicht des Filtermaterials 1 kann das zu reinigende Gas hindurch treten. Das zu reinigende Gas strömt also vorzugsweise entlang der gefalteten Schichten 2,3, und nicht quer zu diesen und, wenn überhaupt, nur in geringem Umfang durch die Schichten hindurch. Die Druckverluste sind daher gering.

In der hier dargestellten Ausführungsform ist der Filter von einer Mantelschicht 9 umgeben.

Im Falle eines Einsatzes des Filters 8 als Zigarettenfilter kann die Mantelschicht 9 ein einfaches Umwickelpapier sein, das einstückig sowohl den Tabakstrang der Zigarette (hier nicht dargestellt) als auch den Zigarettenfilter umgeben kann. Es ist auch möglich, dass die Mantelschicht 9 nur den Filter 8 umgibt.

Die Oberfläche 10 des Filtermaterials 1 bildet die innere Oberfläche der Kanäle 11. Durch die Vertiefungen 5 und durch das Krimpen des Filtermaterials 1 bildet sich eine unebene Oberflächenstruktur der Kanäle 11 aus, die sich positiv auf die Filterwirkung des erfindungsgemäßen Filters auswirkt.

Fig. 4 zeigt einen Schnitt durch den erfindungsgemäßen Filter entlang der Linie A-A. Das Filtermaterial 1 ist, wie hier dargestellt, wechselseitig gelegt, sodass sich in Längsrichtung des Filters Kanäle 11 ausbilden. Das wechselseitig gelegte Filtermaterial 1 kann innerhalb des Filters 8 symmetrisch oder unsymmetrisch angeordnet sein. In der hier dargestellten Ausführungsform bilden die wechselseitig gelegten Filtermateriallagen 1 einzelne Kreissegmente. Die Anordnung der Lagen aus Filtermaterial kann auch unregelmäßig sein.

Das erfindungsgemäße Filtermaterial lässt sich auch in Anlagen zum Reinigen von Luft und Gasen einsetzen. Das Legen des Filtermaterials 1 kann, wie in den Fign. 3 und 4 dargestellt, auch in Form eines Zylinders erfolgen, die Form des in den Anlagen eingesetzten Filters kann im Übrigen beliebig sein, beispielsweise in Kastenform oder anderen denkbaren Formen.

### Bezugszeichenliste:

- 1: Filtermaterial
- 2: Faserschicht
- 3: weitere Schicht
- 4: Prägebereich
- 5: Vertiefungen
- 6: Erhebungen
- 7: weitere Vertiefungen
- 8: Filter
- 9: Mantelschicht
- 10: Oberfläche des Filtermaterials 1
- 11: Kanäle

## Patentansprüche

1. Filter zum Reinigen von Luft und Gasen, der ein Filtermaterial enthält welches von einer Mantelschicht (9) umgeben ist, wobei das Filtermaterial eine Faserschicht (2) aus Zellstofffasern umfasst, und die auf mindestens einer Flachseite eine weitere Schicht (3) aufweist, wobei die Zellstofffasern der Faserschicht 2 bereichsweise durch Verpressen unter Verdichtung der Zellstofffasern in den verpressten Bereichen (4) miteinander verbunden sind, **dadurch gekennzeichnet, dass** die Faserschicht (2) und die optional vorhandenen weiteren Schicht(en) (3) gekrimpt sind und dass die Faserschicht (2) und die mindestens vorhandene(n) weitere(n) Schicht(en) (3) in Form einer Faserbahn vorliegen, welche unter Ausbildung von sich in Längsrichtung des zu reinigenden Luftstroms erstreckenden Kanälen (11) gelegt ist.

2. Filter nach Anspruch 1, **dadurch gekennzeichnet, dass** die Zellstofffasern in den verpressten Bereichen (4) unter Hitzebeaufschlagung verpresst sind.

3. Filter nach einem der Ansprüche 1 oder 2, **dadurch gekennzeichnet dass** bei der Herstellung des Filtermaterials weder Klebstoffe noch andere Bindemittel verwendet werden.

4. Filter nach Anspruch 3, **dadurch gekennzeichnet, dass** die Faserschicht auf beiden Flachseiten weitere Schichten (3) aufweist, wobei die weiteren Schichten aus gleichen oder voneinander verschiedenen Materialien sein können.

5. Filter nach einem der Ansprüche 3 oder 4, **dadurch gekennzeichnet, dass** die weiteren Schichten (3) unabhängig voneinander ausgewählt sind aus Tissue, textilem, vliesartigem oder folienartigem Material.

6. Filter nach einem der Ansprüche 1 bis 5, **dadurch gekennzeichnet, dass** es ein Flächengewicht zwischen 15 g/m² und 600 g/m², vorzugsweise zwischen 20 g/m² und 200 g/m², aufweist.

7. Filter nach einem der Ansprüche 1 bis 6, **dadurch gekennzeichnet, dass** es ein oder mehrere Zusatzstoffe ausgewählt aus Adsorptionsmitteln und/oder Geschmacks- und weiteren Hilfsstoffen enthält.

8. Filter nach Anspruch 7, **dadurch gekennzeichnet, dass** die Adsorptionsmittel ausgewählt sind aus Aktivkohlen, Zeolithen, Silikaten und/oder SiO₂.

9. Verwendung des Filters nach einem der Ansprüche 1 bis 8 in Entstaubungs- und Gasreinigungsanlagen.

10. Verwendung des Filters nach einem der Ansprüche 1 bis 8 in Rauchwaren.

11. Zigarettenfilter, welcher einen Filter nach einem der Ansprüche 1 bis 8 umfasst.

12. Zigarettenfilter nach Anspruch 11, **dadurch gekennzeichnet, dass** das Filtermaterial an dem Ende, an welchem der Rauch eintritt, ein weiteres Filtermaterial aufweist.

13. Zigarettenfilter nach einem der Ansprüche 11 oder 12, **dadurch gekennzeichnet, dass** das weitere Filtermaterialien ausgewählt sind aus Aktivkohle, Celluloseacetat, Papier oder sonstigen nach Stand der Technik bekannten Filtermaterialien.

14. Zigarettenfilter nach einem der Ansprüche 11 bis 13, **dadurch gekennzeichnet, dass** dem Filtermaterial an dem Ende, an welchem der Rauch austritt, ein weiteres Material als optischer Abschluss angeschlossen ist.

15. Zigarettenfilter nach einem der Ansprüche 11 bis 13, **dadurch gekennzeichnet, dass** nach einer Kompostierung von höchstens 12 Wochen Dauer in einer >2 mm-Siebfraktion maximal 10 % des ursprünglichen Trockengewichts des Ausgangsmaterials erhalten werden.

## Claims

1. Filter for cleaning air and gases which contains a filter material surrounded by a jacketing layer (9), wherein the filter material comprises a fibrous layer (2) of cellulosic pulp fibres, and said layer has on at least one flat side a further layer (3), wherein the cellulosic pulp fibres of the fibrous layer (2) are regionally in an interconnected state as a result of compression moulding and densifying the cellulosic pulp fibres in the compression-moulded regions (4), **characterized in that** the fibrous layer (2) and the optionally present further layer(s) (3) have a crimp and **in that** the fibrous layer (2) and the at least present further layer(s) (3) take the form of a fibrous web laid to form channels (11) extending in the longitudinal direction of the airstream to be cleaned.

2. Filter according to Claim 1, **characterized in that** the cellulosic pulp fibres in the compression-moulded regions (4) have undergone compression moulding with application of heat.

3. Filter according to either of Claims 1 and 2, **characterized in that** neither adhesives nor any other binders are used to produce the filter material.

4. Filter according to Claim 3, **characterized in that** the fibrous layer has further layers (3) on both flat sides, wherein the further layers may be of the same or mutually different materials.

5. Filter according to either of Claims 3 and 4, **characterized in that** the further layers (3) are independently selected from tissue, textile material, batt-type material or film-type material.

6. Filter according to any one of Claims 1 to 5, **characterized in that** it has a basis weight between 15 g/m² and 600 g/m², preferably between 20 g/m² and 200 g/m².

7. Filter according to any one of Claims 1 to 6, **characterized in that** it contains one or more added substances selected from adsorbents and/or flavouring and/or further excipient substances.

8. Filter according to Claim 7, **characterized in that** the adsorbents are selected from activated carbons, zeolites, silicates and/or SiO₂.

9. Use of the filter according to any one of Claims 1 to 8 in dedusting and gas-cleaning apparatus.

10. Use of the filter according to any one of Claims 1 to 8 in smoking articles.

11. Cigarette filter comprising a filter according to any one of Claims 1 to 8.

12. Cigarette filter according to Claim 11, **characterized in that** the filter material has a further filter material at the end where the smoke enters.

13. Cigarette filter according to either of Claims 11 and 12, **characterized in that** the further filter materials are selected from activated carbon, cellulose acetate, paper or other prior art filter materials.

14. Cigarette filter according to any one of Claims 11 to 13, **characterized in that** the end of the filter material where the smoke exits has a further material connected to it as a visual termination.

15. Cigarette filter according to any one of Claims 11 to 13, **characterized in that** not more than 10% of the original dry weight of the initial material is retained in a > 2 mm sieve fraction after composting for not more than 12 weeks.

## Revendications

1. Filtre destiné à la purification de l'air et d'épuration des gaz, lequel contient un matériau filtrant qui est entouré d'une couche de gainage (9), le matériau filtrant comprenant une couche fibreuse (2) constituée de fibres de cellulose, et laquelle couche de gainage présente une autre couche (3) sur au moins une face plate, où les fibres de cellulose de la couche fibreuse (2) sont reliées les unes aux autres par endroits selon un procédé de compression, en compactant les fibres de cellulose dans les zones (4) compressées, **caractérisé en ce que** la couche fibreuse (2) et la ou les autres couches (3), présentes accessoirement, sont serties et **en ce que** la couche fibreuse (2) et la ou les au moins autres couches (3), présentes accessoirement, se présentent sous la forme d'une bande de fibres, laquelle est posée en formant des canaux (11) qui s'étendent dans la direction longitudinale du courant d'air devant être nettoyé.

2. Filtre selon la revendication 1, **caractérisé en ce que** les fibres de cellulose sont comprimées dans les zones (4) compressées selon un procédé d'application de la chaleur.

3. Filtre selon l'une des revendications 1 ou 2, **caractérisé en ce qu'**aucune colle ni aucun autre agent liant n'est employé(e) lors de la fabrication du matériau filtrant.

4. Filtre selon la revendication 3, **caractérisé en ce que** la couche fibreuse présente d'autres couches (3) sur les deux faces plates, ces autres couches pouvant être constituées de matériaux de fabrication qui sont identiques ou différents les uns des autres.

5. Filtre selon l'une des revendications 3 ou 4, **caractérisé en ce que** l'autres couches (3) sont sélectionnées indépendamment les unes des autres à partir de tissus, de matériaux textiles, de matériaux non tissés ou de matériaux en feuille.

6. Filtre selon l'une des revendications 1 à 5, **caractérisé en ce que** ledit filtre présente un grammage compris entre 15 g/m² et 600 g/m², de préférence compris entre 20 g/m² et 200 g/m².

7. Filtre selon l'une des revendications 1 à 6, **caractérisé en ce que** ledit filtre contient un ou plusieurs additifs sélectionnés à partir d'agents adsorbants et/ou d'arômes et d'autres adjuvants.

8. Filtre selon la revendication 7, **caractérisé en ce que** les agents adsorbants sont sélectionnés à partir de charbons actifs, de zéolites, de silicates et/ou de SiO₂.

9. Utilisation du filtre selon l'une des revendications 1 à 8 dans des installations de dépoussiérage et d'épuration des gaz.

10. Utilisation du filtre selon l'une des revendications 1 à 8 dans des articles à fumer.

11. Filtre à cigarette, lequel comprend un filtre selon l'une des revendications 1 à 8.

12. Filtre à cigarette selon la revendication 11, **caractérisé en ce que** le matériau filtrant présente un autre matériau filtrant, au niveau de son extrémité par laquelle la fumée pénètre.

13. Filtre à cigarette selon l'une des revendications 11 ou 12, **caractérisé en ce que** les autres matériaux filtrants sont sélectionnés à partir de charbons actifs, d'acétate de cellulose, de papier ou d'autres matériaux filtrants connus selon l'état de la technique.

14. Filtre à cigarette selon l'une des revendications 11 à 13, **caractérisé en ce qu'**un autre matériau, faisant office de terminaison optique, est raccordé au matériau filtrant, au niveau de l'extrémité par laquelle la fumée s'échappe.

15. Filtre à cigarette selon l'une des revendications 11 à 13, **caractérisé en ce que**, après un compostage dont la durée n'excède pas 12 semaines, au plus 10 % du poids à sec initial par rapport au matériau de base sont obtenus dans une fraction granulométrique >2 mm.
